(19) **Europäisches Patentamt**
**European Patent Office**
**Office européen des brevets**

(11) **EP 4 297 410 B1**

(12) **FASCICULE DE BREVET EUROPEEN**

(45) Date de publication et mention
de la délivrance du brevet:
**15.10.2025 Bulletin 2025/42**

(21) Numéro de dépôt: **23180481.6**

(22) Date de dépôt: **20.06.2023**

(51) Classification Internationale des Brevets (IPC):
*H04N 21/4223* (2011.01)    *H04N 21/439* (2011.01)
*H04N 21/44* (2011.01)    *H04N 21/442* (2011.01)
*H04R 1/40* (2006.01)    *H04S 7/00* (2006.01)
*H04R 3/12* (2006.01)

(52) Classification Coopérative des Brevets (CPC):
**H04N 21/4398; H04N 21/4223; H04N 21/44008;**
**H04N 21/44218; H04R 3/12; H04S 7/303;**
H04S 2420/11

(54) **PROCÉDÉ DE GESTION D'UN FLUX AUDIO À L'AIDE D'UN APPAREIL DE PRISE DE VUE ET ÉQUIPEMENT DÉCODEUR ASSOCIÉ**

VERFAHREN ZUR VERWALTUNG EINES AUDIOSTROMS MIT EINER BILDAUFNAHMEVORRICHTUNG UND ENTSPRECHENDE DECODERVORRICHTUNG

METHOD FOR MANAGING AN AUDIO STREAM USING A CAMERA AND ASSOCIATED DECODER EQUIPMENT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.06.2022 FR 2206211**

(43) Date de publication de la demande:
**27.12.2023 Bulletin 2023/52**

(73) Titulaire: **Sagemcom Broadband SAS**
**92270 Bois-Colombes (FR)**

(72) Inventeurs:
• **BERGER, Jérôme**
**92270 BOIS-COLOMBES (FR)**
• **BOURGOIN, Gilles**
**92270 BOIS-COLOMBES (FR)**
• **LUCAS DE COUVILLE, Arnaud**
**92270 BOIS-COLOMBES (FR)**

(74) Mandataire: **Cabinet Boettcher et al**
**5, rue de Vienne**
**75008 Paris (FR)**

(56) Documents cités:
**US-A1- 2010 323 793    US-A1- 2013 121 515**
**US-A1- 2018 020 311    US-A1- 2019 075 418**
**US-A1- 2020 202 856**

**Description**

L'invention concerne le domaine de la restitution audio via un groupe d'équipements de restitution audio.

ARRIERE PLAN DE L'INVENTION

Il est aujourd'hui courant, dans les installations multimédia domestiques modernes, d'associer à un équipement décodeur un groupe d'équipements de restitution audio comprenant différents équipements de restitution audio dans le but d'améliorer l'expérience acoustique d'un utilisateur. En effet, l'utilisateur est ainsi bien plus « enveloppé » dans le son diffusé par le groupe d'équipements de restitution audio que si ledit son était diffusé par un seul équipement de restitution audio.

Usuellement, le groupe d'équipements de restitution audio est associé à des moyens de mixage qui permettent de répartir les canaux, d'un flux audio multi-canal réceptionné par l'équipement décodeur, entre les différents équipements de restitution audio. Un exemple est décrit dans le document US 2013/121515 A1.

Le système Dolby ATMOS (marque déposée) optimise ainsi le rendu du son multi-canaux en fonction de la disposition des équipements de restitution audio par rapport à une position d'écoute théorique de l'utilisateur dans la pièce. Par exemple si le groupe de restitution audio comprend deux équipements de restitution audio agencés à droite et à gauche de l'équipement décodeur, le système considérera que l'utilisateur se situe entre les deux équipements de restitution audio.

Ainsi, ce type de système ne tient pas compte de la position réelle de l'utilisateur. Dès lors l'expérience acoustique de l'utilisateur n'est en réalité de bonne qualité que si l'utilisateur est proche de la position d'écoute théorique.

OBJET DE L'INVENTION

Un but de l'invention est de proposer un procédé de gestion d'un flux audio qui permette d'améliorer l'expérience acoustique de l'utilisateur.

Un but de l'invention est de proposer un équipement décodeur correspondant.

RESUME DE L'INVENTION

En vue de la réalisation de ce but, on propose un procédé de gestion d'un flux audio lu par au moins un groupe d'équipements de restitution audio comprenant au moins deux équipements de restitution audio, ledit groupe étant agencé dans un lieu donné.

Selon l'invention, le procédé comporte au moins les étapes de :

- Détecter sur au moins une image acquise par au moins un appareil de prise de vue du lieu donné, la ou les utilisateurs présents sur l'image et en déduire, pour chacun desdits utilisateurs, au moins une information caractéristique de la position de l'utilisateur considéré dans ladite image,

- Déterminer au moins à partir des différentes informations caractéristiques, un angle de gisement optimal défini par l'angle formé entre :

  • Un axe de l'appareil de prise de vue, et
  • Un axe selon lequel un son restitué par le groupe d'équipement de restitution audio se propage pour atteindre les différents utilisateurs qui étaient présents sur l'image, l'angle de gisement optimal tel que décrit dans la revendication 1.

- Fournir à des moyens de mixage répartissant le flux audio entre les différents équipements de restitution audio du groupe, une grandeur caractéristique de l'angle de gisement optimal afin que les moyens de mixage répartissent le flux audio au moins en fonction de ladite valeur.

De la sorte, l'invention permet de s'adapter aux positions réelles des utilisateurs présents dans le lieu donné y compris dans le cas où il y a plusieurs utilisateurs. En fournissant une valeur d'angle de gisement liée à la position réelle des différents utilisateurs dans le lieu donné, les moyens de mixage peuvent adapter le flux audio de manière à améliorer l'expérience acoustique des différents utilisateurs.

L'invention permet donc d'obtenir un rendu acoustique spatialisé adapté à la position des utilisateurs présents dans le lieu donné.

De façon avantageuse, l'invention ne nécessite pas d'étape de calibration préalable à l'utilisation du groupe d'équipements de restitution sonore.

Optionnellement, l'appareil de prise de vue génère à intervalle régulier une nouvelle image du lieu donné, et la valeur d'angle de gisement optimal est recalculée pour chaque nouvelle image afin que les moyens de mixage répartissent le flux audio entre les différents équipements de restitution audio du groupe sur la base de cette nouvelle valeur d'angle de gisement optimal.

Ainsi l'invention s'adapte de manière dynamique aux différents utilisateurs. L'invention permet en particulier de prendre en compte non seulement la position réelle des utilisateurs, mais également la présence de plusieurs utilisateurs mais également le déplacement desdits utilisateurs.

Ceci permet d'améliorer encore davantage l'expérience acoustique des utilisateurs.

On obtient ainsi un rendu acoustique spatialisé adapté de manière dynamique à la position des utilisateurs présents dans le lieu donné.

Optionnellement, l'information caractéristique est au moins une abscisse dans l'image.

Optionnellement, l'information caractéristique est une information caractéristique de la position du visage de l'utilisateur dans l'image.

Optionnellement, l'angle de gisement optimal est lié à une position moyenne des différents utilisateurs apparaissant sur l'image.

Optionnellement, l'angle de gisement optimal est lié à une moyenne spatiale de la position des différents utilisateurs apparaissant sur l'image ou à une moyenne angulaire de la position des différents utilisateurs apparaissant sur l'image ou aux positions des deux utilisateurs les plus éloignés l'un de l'autre sur l'image.

Optionnellement, on estime également un angle de dispersion qui caractérise la dispersion des différents utilisateurs présents sur l'image et on fournit aux moyens de mixage une grandeur caractéristique de l'angle de dispersion afin que les moyens de mixage répartissent le flux au moins en fonction de ladite valeur.

Optionnellement, le flux audio est un flux audio multi-canal et le groupe d'équipements de restitution audio comporte au moins un équipement de restitution audio de moins que le nombre de canaux du flux audio multicanal.

Optionnellement on estime l'angle de gisement optimal également en tenant compte de l'attention des utilisateurs présents sur l'image.

Optionnellement on prend en compte l'orientation de la tête des utilisateurs présents sur l'image pour déterminer l'angle de gisement optimal $\beta_{opt}$.

Optionnellement on prend en compte un endormissement potentiel des utilisateurs présents sur l'image pour déterminer l'angle de gisement optimal $\beta_{opt}$.

Optionnellement on prend en compte la mobilité des utilisateurs présents sur l'image pour gérer le flux audio. Optionnellement on fournit également aux moyens de mixage la distance des utilisateurs à l'installation.

Optionnellement les moyens de mixage répartissent le flux audio entre les différents équipements de restitution audio du groupe en se basant sur un ou des jeux d'au moins un paramètre audio précalculé.

Optionnellement le flux audio est un flux audio multi-canal et le groupe d'équipements de restitution audio comporte au moins un équipement de restitution audio de moins que le nombre de canaux du flux audio multicanal.

L'invention concerne également une installation permettant de mettre en œuvre le procédé tel que précité, comprenant au moins deux équipements de restitution audio, des moyens pour recevoir au moins un flux audio, les moyens de mixage permettant de répartir le ou les canaux du flux audio entre les équipements de restitution audio, un appareil de prise de vue et des moyens pour analyser au moins une image fournie par l'appareil de prise de vue.

Optionnellement l'installation est un équipement décodeur. L'invention concerne également un programme d'ordinateur comprenant des instructions qui conduisent une installation telle que précité à exécuter le procédé tel que précité.

L'invention concerne également un support d'enregistrement lisible par ordinateur, sur lequel est enregistré le programme d'ordinateur tel que précité.

D'autres caractéristiques et avantages de l'invention ressortiront à la lecture de la description qui suit des modes de réalisation particuliers non limitatifs de l'invention.

## BREVE DESCRIPTION DES DESSINS

L'invention sera mieux comprise à la lumière de la description qui suit en référence aux figures annexées parmi lesquelles :

[Fig. 1] la figure 1 représente une installation selon un premier mode de réalisation de l'invention ;
[Fig. 2] la figure 2 est une vue de dessus schématique d'un lieu donné intégrant l'installation telle qu'illustrée à la figure 1, deux utilisateurs étant présents dans le lieu donné ;
[Fig. 3] la figure 3 illustre schématiquement les principales étapes mises en œuvre par l'installation illustrée à la figure 1 pour gérer un flux audio réceptionné par ladite installation ;
[Fig. 4] la figure 4 représente une installation selon un deuxième mode de réalisation de l'invention.

## DESCRIPTION DETAILLEE DE L'INVENTION

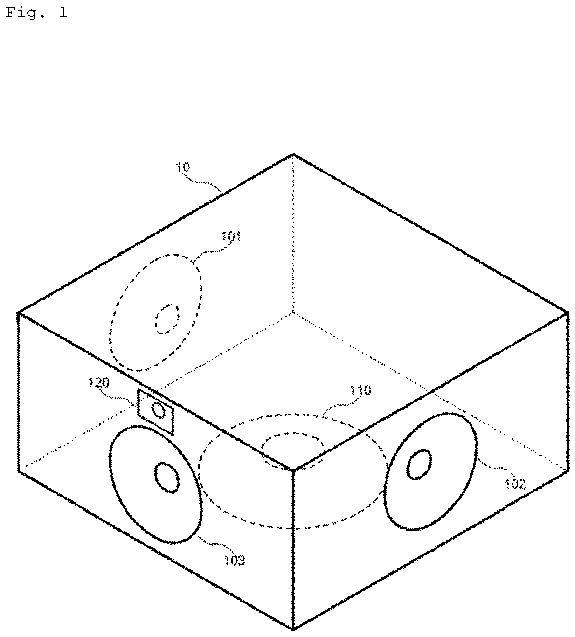

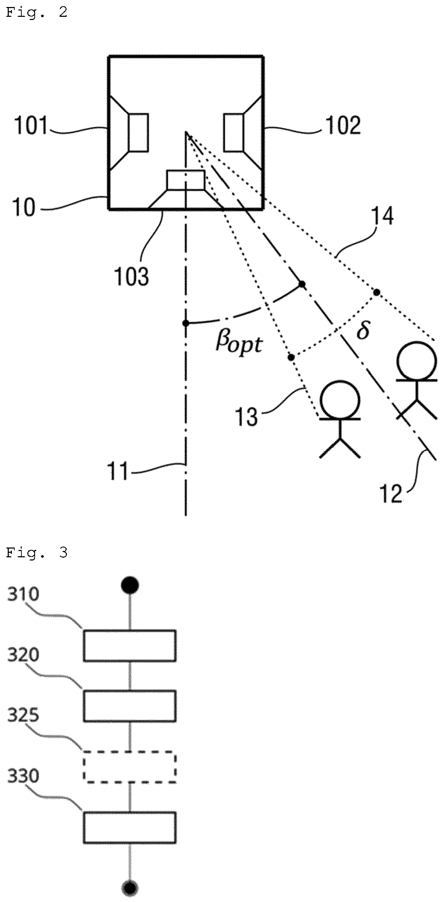

En référence aux figures 1 et 2, l'installation selon un premier mode de réalisation est une installation comprenant un système audio associé à un groupe d'équipements de restitution audio. L'installation est agencée dans un lieu donné et par exemple dans une pièce d'une habitation.

L'installation est donc destinée au moins à diffuser du son aux utilisateurs présents dans la pièce.

Le système audio est par exemple une chaîne Hi-Fi ou bien un équipement décodeur 10.

Le groupe d'équipements de restitution audio est par exemple intégré au système audio.

Par exemple l'équipement décodeur 10 est un boitier décodeur. Optionnellement le boitier décodeur est un boitier décodeur de télévision. Par exemple le boitier décodeur de télévision est un boiter décodeur de télévision VSB pour « Video Sound Box » (marque déposée) et par exemple un boitier décodeur de télévision VSB4.

L'équipement décodeur 10 comporte une interface de communication, interface grâce à laquelle l'équipement décodeur acquiert en service au moins un flux d'entrée audio, et par exemple un flux d'entrée audio/vidéo, qui peut provenir d'un ou de plusieurs réseaux de diffusion. Les réseaux de diffusion peuvent être de tout type. Ainsi, selon une première variante, le réseau de diffusion est un réseau de télévision par satellite, et l'équipement décodeur 10 reçoit le flux d'entrée à travers une antenne parabolique. Selon une deuxième variante, le réseau de diffusion est une connexion Internet et l'équipement décodeur 10 reçoit le flux d'entrée à travers ladite connexion Internet. Selon une troisième variante, le réseau de diffusion est un réseau de télévision numérique terrestre (TNT) ou un réseau de télévision par câble. De manière globale, le réseau de diffusion peut être de source diverse : satellite, câble, IP, TNT (réseau de Télévision Numérique Terrestre), flux audio/vidéo stocké localement, etc.

L'équipement décodeur 10 est donc optionnellement muni d'une sortie lui permettant d'être connecté à un équipement de restitution vidéo ou audio/vidéo telle qu'une télévision qui est donc ici externe audit équipement décodeur 10.

Par ailleurs, l'équipement décodeur 10 est muni de moyens de traitement permettant entre autres de traiter le flux d'entrée. Les moyens de traitement comportent par exemple un processeur et/ou un calculateur et/ou un micro-ordinateur ... Dans le cas présent, les moyens de traitement comportent un processeur.

Les équipements de restitution audio sont par exemple des haut-parleurs intégrés à l'équipement décodeur 10. Selon un mode de réalisation particulier, l'équipement décodeur 10 comporte au moins deux haut-parleurs et par exemple au moins trois haut-parleurs et par exemple au moins quatre haut-parleurs. Optionnellement l'équipement décodeur 10 est équipé de trois haut-parleurs 101, 102, 103 agencés sur trois flancs successifs de l'équipement décodeur et d'un quatrième haut-parleur 110 agencé sur le fond de l'équipement décodeur 10. Les trois haut-parleurs 101, 102, 103 des flancs sont à large bande alors que le haut-parleur du fond 110 est consacré à la restitution des basses fréquences. Cette configuration à quatre haut-parleurs est communément appelé « système 3.1 ».

Par ailleurs, l'installation comporte des moyens de mixage permettant de répartir au moins un canal du flux d'entrée entre les différents équipements de restitution audio 101, 102, 103, 110. Ceci permet de générer un effet de spatialisation pour le ou les utilisateurs présents dans la pièce.

Optionnellement, le flux audio du flux d'entrée est un flux audio multi-canal et le groupe d'équipements de restitution audio comporte au moins un équipement de restitution audio de moins que le nombre de canaux du flux audio multicanal. Par exemple, le flux audio est un flux cinq canaux.

De préférence, les moyens de mixage sont intégrés à l'équipement décodeur 10. Par exemple, les moyens de mixage sont intégrés aux moyens de traitement.

De façon particulière, les moyens de mixage comportent une mémoire sur laquelle est stockée une bibliothèque du marché et/ou communiquent à distance (via par exemple l'interface de communication de l'équipement décodeur) avec une bibliothèque du marché. La bibliothèque du marché est par exemple la bibliothèque Dolby ATMOS (marque déposée).

Une telle bibliothèque permet aux moyens de mixage d'assurer la répartition du flux à partir de données d'entrées indiquées à la bibliothèque.

De tels moyens de mixage (et la bibliothèque associée) sont déjà connus de l'art antérieur et permettent usuellement de répartir les canaux du flux audio entre les différents équipements de restitution audio en fonction de données d'entrées fournies par l'utilisateur ayant disposé l'installation dans la pièce lors de l'initialisation des équipements de restitution audio.

Dans le cadre de l'invention, les données d'entrée vont être fournies directement par l'installation elle-même, par exemple par l'équipement décodeur 10, aux moyens de mixage. Ces données d'entrées seront décrites plus bas.

Selon un autre aspect, l'installation comporte un appareil de prise de vue 120. L'appareil de prise de vue 120 est par exemple intégré à l'équipement décodeur 10. L'appareil de prise de vue 120 est par exemple agencé au niveau du flanc portant l'équipement de restitution audio 103 et encadré par les deux autres flancs portant également les équipements de restitution audio 101, 102. L'appareil de prise de vue 120 est ainsi centré dans l'équipement décodeur 10.

L'équipement décodeur 10 est agencé de sorte que son flanc portant l'appareil de prise de vue 120 soit tourné vers le lieu donné soit ici l'intérieur de la pièce. L'équipement de prise de vue 120 est par exemple une caméra.

L'installation comporte par ailleurs des moyens d'analyse d'image. Lesdits moyens sont par exemple intégrés à l'équipement décodeur 10 et par exemple intégrés aux moyens de traitement de l'équipement décodeur 10.

Les moyens d'analyse d'image sont configurés pour analyser au moins une image fournie par l'appareil de prise de vue 120, en détecter au moins une information caractéristique de la position de chacun des utilisateurs présents sur l'image et transmettre ces informations (i.e. les données d'entrées précitées) de position aux moyens de mixage pour que lesdits moyens de mixage puissent répartir les canaux du flux audio entre les équipements de restitution audio au vu de ces informations.

En référence à la figure 3, une mise en œuvre particulière d'un procédé de gestion du flux audio par l'installation décrite ci-dessus va être à présent détaillée.

Au cours d'une étape préalable, l'appareil de prise de vue 120 acquiert au moins une image de la pièce.

Au cours d'une première étape 310, les moyens d'analyse d'image détectent sur l'image la ou les utilisateurs présents sur l'image. Par exemple, les moyens d'analyse détectent les visages présents sur l'image pour détecter les utilisateurs.

Les moyens d'analyse (ou d'autres moyens de l'installation comme par exemple les moyens de traitement) en déduisent, pour chacun desdits utilisateurs, au moins une information caractéristique de la position de l'utilisateur considéré dans ladite image et donc dans le cas présent de la position du visage de l'utilisateur.

Selon une première option, l'installation (ici l'équipement décodeur) s'appuie sur la méthode de Viola-Jones, qui est un algorithme connu permettant de détecter des visages dans une image. Cet algorithme prend en entrée une image et produit une liste de rectangles englobant chaque visage détecté. On peut se référer pour plus de détails par exemple à la page internet https://fr.wikipedia.org/wiki/M%C3%A9thode_de_Vio la_et_Jo nes ou bien à l'article Paul Viola et Michael Jones, « Rapid Object Detection using a Boosted Cascade of Simple Features », IEEE CVPR, 2001.

Par exemple le rectangle englobe le visage et en particulier les coordonnées des yeux, du nez et de la bouche.

Selon une deuxième option, l'installation (ici l'équipement décodeur) s'appuie sur un réseau de neurones pour détecter la position des visages dans l'image. Le réseau de neurones est par exemple intégré à l'équipement décodeur et par exemple aux moyens d'analyse et/ou aux moyens de traitement. Le réseau de neurones est par exemple le réseau de neurones BlazeFace (marque déposée) ou MobileNet (marque déposée). Pour plus de détails concernant BlazeFace on peut se référer par exemple à l'article BlazeFace: Sub-millisecond Neural Face Detection on Mobile GPUs, V. Bazarevsky, Y. Kartynnik, A. Vakunov, K. Raveendran, M. Grundmann - Computing Research Repository - 2019 (https://arxiv.org/abs/1907.05047). Pour plus de détails concernant MobileNet on peut se référer par exemple à l'article MobileNets : Efficient Convolutional Neural Networks for Mobile Vision Applications, A.G. Howard, M. Zhu, B. Chen, D. Kalenichenko, W. Wang, T. Weynand, M. Andreetto, H. Adam - Computing Research Repository - 2017 (https://arxiv.org/abs/1704.04861).

Le réseau de neurones prend en entrée une image et produit une liste de rectangles englobant chaque visage détecté. Par exemple le rectangle englobe le visage ainsi que les coordonnées des yeux, du nez et de la bouche.

Que l'on se place dans le cadre de la première option, de la deuxième option ou d'une autre option pour détecter les visages des utilisateurs, l'installation (et par exemple l'équipement décodeur) construit ensuite une liste de positions des visages dans l'image, en prenant les coordonnées d'un point donné dans chaque rectangle détecté. Les informations caractéristiques de la position des utilisateurs présents sur l'image sont donc des coordonnées (abscisse, ordonnée), coordonnées liées au référentiel de l'image.

Par exemple, l'installation construit une liste de positions des visages dans l'image, en prenant les coordonnées du centre de chaque rectangle détecté. En variante, l'installation construit une liste de positions des visages dans l'image, en prenant les coordonnées du barycentre d'un triangle formé par les positions des yeux et de la bouche dans ledit rectangle.

La première étape décrite 310 permet ainsi d'établir une liste de positions des visages dans l'image comportant pour chaque visage un jeu de coordonnées lié au visage dans l'image. Plus précisément la liste est une liste de positions de visages détectés dans l'image, chaque position étant représentée par une paire (x, y) de valeurs représentant les coordonnées en pixels du point associé au visage dans l'image.

Par la suite, pour simplifier les formules qui vont suivre, on suppose que le point de coordonnées (0, 0) correspond au centre de l'image. Néanmoins ce postulat n'est pas limitatif est le point de coordonnées (0, 0) pourra correspondre à un autre point de l'image que son centre comme par exemple l'un des coins de l'image.

Au cours d'une deuxième étape 320, l'installation (et plus précisément ici l'équipement décodeur 10) détermine à partir de la liste de coordonnées établie à la première étape 310, un angle de gisement optimal $\beta_{opt}$ défini par l'angle formé entre :

- Un premier axe 11 de l'appareil de prise de vue 120, et
- Un deuxième axe 12 selon lequel un son restitué par le groupe d'équipement de restitution audio se propage pour atteindre les différents utilisateurs qui étaient présents sur l'image.

*On rappelle que de façon générale un angle de gisement désigne un angle entre le premier axe 11 de l'appareil de prise de vue 120 et un autre deuxième axe 12 appartenant au même plan horizontal que le premier axe 11 de l'appareil de prise de vue 120.*

La figure 2 représente un tel angle de gisement $\beta_{opt}$. Il s'agit d'un angle s'étendant entre les deux axes précités, lesdits axes appartenant par ailleurs à un même plan horizontal.

L'angle de gisement optimal $\beta_{opt}$ définit de préférence la direction (le deuxième axe 12) dans laquelle on souhaite que le son diffusé par le groupe de restitution audio ait une qualité maximale.

L'angle de gisement optimal $\beta_{opt}$ est tel que le deuxième axe 12 soit de préférence globalement dirigé vers le centre d'un groupe formé par les différents utilisateurs apparaissant sur l'image.

De façon préférée, l'angle de gisement optimal $\beta_{opt}$ est lié à une position moyenne des différents utilisateurs apparaissant sur l'image.

Selon une première option, l'angle de gisement optimal $\beta_{opt}$ est déterminé à partir d'une moyenne spatiale de la position des différents utilisateurs apparaissant sur l'image. On calcule une moyenne $\bar{x}$ des abscisses liées à chacun des visages détectés sur l'image.

L'angle de gisement optimal est alors donné par la formule :

$$\beta_{opt} = \tan^{-1}\left(\frac{2\bar{x}}{W}\tan\frac{\alpha}{2}\right)$$

Où :

$\beta_{opt}$ désigne l'angle de gisement optimal,
W désigne la largeur de l'image acquise en pixels (typiquement W = 1920), et
$\alpha$ désigne l'angle de champ de l'appareil de prise de vue 120 dans un plan horizontal (typiquement $\alpha$ = 120°).

Selon une deuxième option, l'angle de gisement optimal $\beta_{opt}$ est déterminé à partir d'une moyenne angulaire de la position des différents utilisateurs apparaissant sur l'image. On calcule ainsi un angle de gisement $\beta$ pour chaque visage détecté à partir de l'abscisse x lié audit visage par :

$$\beta = \tan^{-1}\left(\frac{2x}{W}\tan\frac{\alpha}{2}\right)$$

L'angle de gisement optimal $\beta_{opt}$ est alors donné par la moyenne des différents angles de gisement $\beta$. Selon une troisième option, l'angle de gisement optimal $\beta_{opt}$ est déterminé à partir des abscisses minimale $x_{min}$ et maximale $x_{max}$ liées aux visages détectés.

A cet effet on calcule les angles de gisement $\beta_{min}$ et $\beta_{max}$ correspondants avec la formule :

$$\beta_{min} = \tan^{-1}\left(\frac{2x_{min}}{W}\tan\frac{\alpha}{2}\right)$$

$$\beta_{max} = \tan^{-1}\left(\frac{2x_{max}}{W}\tan\frac{\alpha}{2}\right)$$

L'angle de gisement optimal $\beta_{opt}$ est alors défini comme étant la moyenne de $\beta_{min}$ et $\beta_{max}$.

Au cours d'une troisième étape 325, qui est optionnelle, l'installation (et ici l'équipement décodeur 10) détermine, à partir de la liste de coordonnées établie à la première étape 310, un angle de dispersion $\delta$ qui caractérise la dispersion des différents utilisateurs présents sur l'image.

La figure 2 représente un tel angle de dispersion $\delta$. Il s'agit d'un angle $\delta$ s'étendant entre deux axes 13, 14 appartenant à un même plan horizontal et coupant chacun l'axe 11 de l'appareil de prise de vue 120, les deux axes 13, 14 passant par ailleurs par respectivement le premier et le deuxième des deux utilisateurs présents les plus éloignés l'un de l'autre (sur l'image) de tous les utilisateurs présents sur l'image.

L'angle de dispersion $\delta$ définit ainsi la largeur de la zone dans laquelle on veut que le son diffusé par le groupe de restitution audio ait une qualité maximale.

De façon préférée, l'angle de dispersion $\delta$ est lié à un écart-type des différentes positions des utilisateurs apparaissant sur l'image.

Selon une première option, l'angle de dispersion $\delta$ est déterminé à partir d'un écart-type spatial de la position des différents utilisateurs apparaissant sur l'image. On calcule ainsi un écart type $\sigma$ des abscisses liées aux visages détectés. Puis on calcule l'angle de dispersion $\delta$ avec la formule suivante :

$$\delta = 2 \times \tan^{-1}\left(\frac{\sigma}{W}\tan\frac{\alpha}{2}\right)$$

Cette première option donne de bons résultats lorsque les utilisateurs sont tous proches de l'axe 11 de l'appareil de prise de vue 120, mais les inventeurs ont pu constater que la dispersion devient surévaluée lorsque certains utilisateurs sont sur les bords de l'image.

Ainsi selon une variante de la première option, on calcule de préférence l'angle de dispersion $\delta$ avec la formule suivante :

$$\delta = 2 \times \left||\beta| - \tan^{-1}\left(\frac{2|\bar{x}| - \sigma}{W}\tan\frac{\alpha}{2}\right)\right|$$

Selon une deuxième version, l'angle de dispersion $\delta$ est lié à un écart-type angulaire des différents utilisateurs apparaissant sur l'image. On calcule ainsi un angle de gisement $\beta$ pour chaque visage détecté à partir de l'abscisse x liée audit visage comme indiqué précédemment.

L'angle de dispersion $\delta$ est alors défini comme étant l'écart-type desdits angles de gisements $\beta$ des visages détectés.

Selon une troisième option, l'angle de dispersion $\delta$ est déterminé à partir des abscisses minimale $x_{min}$ et maximale $x_{max}$ liées aux visages détectés. On calcule les angles de gisement $\beta_{min}$ et $\beta_{max}$ comme indiqué précédemment puis on définit l'angle de dispersion $\delta$ comme étant la différence desdits angles de gisement :

$$\delta = \beta_{max} - \beta_{min}$$

Au cours d'une quatrième étape 330, l'installation (et par exemple l'équipement de décodeur 10 comme par exemple ses moyens de traitement) fournit aux moyens de mixage une grandeur caractéristique de l'angle de gisement optimal $\beta_{opt}$. La grandeur caractéristique de l'angle de gisement optimal $\beta_{opt}$ est ici directement la valeur de l'angle de gisement optimal $\beta_{opt}$ calculée à la deuxième étape 320. Par ailleurs, on fournit également aux moyens de mixage une grandeur caractéristique de l'angle de dispersion $\delta$. La grandeur caractéristique de l'angle de dispersion $\delta$ est ici directement la valeur de l'angle de dispersion $\delta$ calculée à la troisième étape 325.

L'angle de gisement optimal $\beta_{opt}$ et l'angle de dispersion $\delta$ constituent donc ici les données d'entrée des moyens de mixage.

On comprend que ces données d'entrée sont déterminées uniquement par l'installation sans que l'un des utilisateurs ou la personne ayant mis en place l'installation n'ait besoin d'intervenir.

De façon connue en soi, les moyens de mixage adaptent ensuite la répartition des canaux du flux audio en fonction au moins de ces données d'entrée. De préférence, les moyens de mixage adaptent la répartition des canaux du flux audio en fonction au moins de ces données d'entrée et de la position relative des équipements de restitution audio dans l'équipement décodeur 10.

On retient donc qu'il n'est pas nécessaire de modifier les moyens de mixage existants pour mettre en œuvre le procédé de l'invention puisque les moyens de mixage fonctionnaient déjà à partir de données d'entrée fournies par l'utilisateur. L'invention leur fournit toutefois des données d'entrée différentes de celles existantes et bien plus intéressantes. Ces données d'entrées fournies par l'invention peuvent venir en remplacement et/ou en complément des données d'entrées usuellement fournies aux moyens de mixage.

De préférence l'étape préalable d'acquisition d'une image de la pièce est effectuée à intervalles réguliers. Par exemple cette étape est effectuée à un intervalle compris entre 0.1 et 3 secondes, et par exemple compris entre 0.5 et 2 secondes et par exemple compris entre 1 et 1.5 secondes et est par exemple d'une seconde.

Les différentes étapes décrites ci-dessus 310, 320, 325, 330 sont en conséquence elles-aussi mises en œuvre à intervalles réguliers (par exemple le même que celui de l'acquisition des images). Optionnellement les différentes étapes 310, 320, 325, 330 décrites ci-dessus sont mises à œuvre de sorte à déterminer un nouvel angle de gisement optimal $\beta_{opt}$ et un nouvel angle de dispersion $\delta$ pour chaque nouvelle image transmise aux moyens d'analyse. De la sorte, les moyens de mixage adaptent la répartition des canaux du flux audio de manière régulière.

Le procédé décrit permet donc une adaptation dynamique du flux audio retransmis aux utilisateurs.

D'autres options sont envisageables.

Selon une première option, le procédé qui a été décrit prend aussi en compte l'attention du ou des utilisateurs présents sur l'image pour gérer le flux audio.

Selon une première proposition, le procédé qui a été décrit prend aussi en compte l'attention du ou des utilisateurs présents sur l'image pour gérer le flux audio, et par exemple pour calculer l'angle de gisement optimal $\beta_{opt}$. Selon une première possibilité, le procédé prend en compte l'orientation de la tête des utilisateurs présents sur l'image pour déterminer l'angle de gisement optimal $\beta_{opt}$. De façon particulière, un utilisateur est considéré comme très attentif s'il est tourné vers l'installation, en particulier vers l'équipement décodeur 10. Typiquement, l'utilisateur apparaîtra ici de face sur l'image. En revanche si l'utilisateur est peu attentif il sera visible de profil sur l'image. On peut d'ailleurs noter que les utilisateurs qui tournent le dos à l'installation sont déjà implicitement ignorés puisque leur visage n'est pas visible sur l'image.

Selon cette première possibilité, les moyens d'analyse sont configurés pour non seulement détecter un utilisateur sur une image mais également localiser ses yeux et sa bouche. Par exemple les moyens d'analyse s'appuient sur le réseau de neurones BlazeFace déjà mentionné ou sur une variante de la méthode de Viola-Jones telle que par exemple celle décrite dans l'article « Face Detection Using Modified Viola Jones Algorithm, » A. Gupta, Dr R. Tiwari - International Journal of Recent Research in Mathematics Computer Science and Information Technology - 2015 (https://www.paperpublications.org/upload/book/Face%20Det ection%20Using% 20Modified%20Viola%20Jones%20Algorithm-164.pdf)

On sait que pour un visage de face, le triangle formé par les yeux et le milieu de la bouche est un triangle équilatéral. Ainsi lorsque le visage tourne, la distance entre les yeux sur l'image diminue jusqu'à atteindre 0 pour un visage de profil.

En conséquence, l'installation (et par exemple l'équipement décodeur 10) mesure, pour chaque visage détecté sur l'image, le rapport entre la distance interoculaire et la distance yeux - bouche et affecte un poids à chaque visage en fonction de ce rapport.

Par exemple :

$$ w = \frac{2 \times d(LE, RE)}{d(LE, M) + d(RE, M)} + w_0 $$

ou bien encore :

$$ w = \frac{d(LE, RE)}{\max(d(LE, M),\ d(RE, M))} + w_0 $$

Avec pour les deux formules :
w le poids affecté à un visage présent sur l'image, LE, RE et M les positions respectives de l'œil gauche, l'œil droit et la bouche dudit visage dans l'image, d(P,Q) désigne la distance entre les points P et Q, et $w_0$ est une constante prédéterminée qui désigne le poids attribué aux visages de profil (on peut ainsi choisir par exemple $w_0 = 0$ ou $w_0 = 0,25$).

L'angle de gisement optimal $\beta_{opt}$ (et optionnellement l'angle de dispersion $\delta$) est alors déterminé en prenant en compte le poids de chaque visage présent sur l'image. Par exemple l'angle de gisement optimal $\beta_{opt}$ est lié à une moyenne pondérée par les poids de chaque visage présent sur l'image (au lieu d'être lié à une moyenne directe). Par exemple l'angle de dispersion $\delta$ est lié à un écart-type pondéré par les poids de chaque visage présent sur l'image (au lieu d'être lié à un écart-type direct).

Selon une deuxième possibilité, le procédé détecte un endormissement potentiel des utilisateurs présents sur l'image pour déterminer l'angle de gisement

optimal $\beta_{opt}$. L'état de l'art comporte de nombreuses méthodes pour détecter la somnolence, en particulier afin de détecter le niveau d'attention des conducteurs automobiles. On pourra donc se référer par exemple à l'article « A Deep Learning Approach To Detect Driver Drowsiness, » M. Tibrewal, A. Srivastava, Dr R. Kayalvizhi - International Journal of Engineering Research & Technology - 2021 (https://www.ijert.org/a-deep-learning-approach-to-detect-driver-drowsiness). Ainsi on détermine pour chaque visage détecté sur l'image si l'utilisateur est somnolent ou non et on retire de la liste obtenue à l'issue de la première étape 310 les coordonnées associées aux utilisateurs somnolents. Alternativement on attribue un poids plus faible pour les utilisateurs somnolents que pour les autres utilisateurs. Par exemple on attribue aux utilisateurs somnolents un poids w divisé par deux par rapport au poids calculé selon l'une des deux formules indiquées précédemment.

Selon une deuxième possibilité (pouvant être combinée à la première), le procédé qui a été décrit prend en compte encore davantage la mobilité des utilisateurs présents sur l'image pour gérer le flux audio, et par exemple pour calculer l'angle de dispersion δ (afin optionnellement d'avoir un angle de dispersion δ plus grand si un ou plusieurs utilisateurs se déplacent rapidement).

Par exemple, l'installation (et par exemple l'équipement décodeur 10) concatène les listes obtenues à l'issue de la première étape 310 pour plusieurs images successives (par exemple pour les N dernières images, N étant compris entre 5 et 15, N étant par exemple égal à 10). On exécute ensuite la deuxième étape 320 et la troisième étape 325 en utilisant la liste concaténée.

Selon un autre exemple, l'installation (et par exemple l'équipement décodeur) crée deux listes : une liste correspondant aux visages détectés dans la dernière image capturée et une liste concaténée correspondant aux N dernières images (par exemple N étant compris entre 5 et 15, N étant par exemple égal à 10). Ensuite on détermine l'angle de gisement optimal $\beta_{opt}$ à partir de la liste liée à la dernière image capturée et on détermine l'angle de dispersion δ à partir de la liste concaténée. Dès lors la qualité de restitution du son est optimale pour la position actuelle des utilisateurs, mais la taille de la zone optimale d'écoute est adaptée à leur mobilité afin de maximiser la qualité de restitution du son s'ils se déplacent.

Selon une deuxième proposition (pouvant être combinée à la première proposition), le procédé qui a été décrit prend aussi en compte l'attention du ou des utilisateurs présents sur l'image pour gérer le flux audio, et par exemple pour calculer une autre donnée d'entrée que l'angle de gisement optimal $\beta_{opt}$.

Ainsi, selon une troisième possibilité (pouvant être combinée à la première ou à la deuxième possibilité), le procédé qui a été décrit prend en compte, pour gérer le flux audio, la distance des utilisateurs à l'installation et plus particulièrement ici à l'équipement décodeur 10. Selon cette troisième possibilité, les moyens d'analyse d'image sont configurés pour non seulement détecter un utilisateur sur une image mais également localiser ses yeux et sa bouche. Par exemple les moyens d'analyse s'appuient sur le réseau de neurones BlazeFace ou sur la variante de la méthode de Viola-Jones.

Puis pour chaque utilisateur détecté, on estime la distance de l'utilisateur par la formule suivante :

$$dist = \frac{d(ME,M)}{d_{ref}}$$

Avec :

dist la distance en mètres entre l'utilisateur détecté et l'appareil de prise de vue 120,
ME est la position du point médian entre les deux yeux,
M est la position de la bouche,
d(ME,M) désigne la distance en pixels entre la bouche M et le point médian entre les deux yeux ME,
$d_{ref}$ est une constante prédéterminée correspondant à la valeur de d(ME,M) pour une personne de taille moyenne (par exemple de 1 mètre 70) située à une distance donnée l'appareil de prise de vue 120 (par exemple à une distance de 1 mètre). On choisit par exemple $d_{ref}$ = 40 pixels /mètres. Une donnée d'entrée liée à cette distance est alors fournie aux moyens de mixage. Cette donnée d'entrée peut par exemple permettre aux moyens de mixage d'ajuster le niveau sonore généré par chaque équipement de restitution audio et/ou pour affiner la manière dont est retranscrit le son vis-à-vis de la position du ou des utilisateurs dans le lieu donné (plus un utilisateur est loin de l'installation plus l'écart entre les équipements de restitution audio lui semblera faible : les moyens de mixage pourront en tenir compte pour exagérer en conséquence l'effet de spatialisation pour un même rendu subjectif pour l'utilisateur).

Par exemple, on fournit aux moyens de mixage une donnée d'entrée caractéristique d'une première moyenne des distances estimées. La donnée d'entrée est directement ladite première moyenne ou bien est une donnée caractérisant la géométrie des équipements de restitution audio dans l'installation et liée à ladite première moyenne.

En remplacement ou en complément, on estime la distance de chaque utilisateur, puis on calcule une deuxième moyenne, pondérée (voir les possibilités de calcul des poids w précitées) des distances estimées pour tous les utilisateurs présents sur l'image. La donnée d'entrée est directement ladite deuxième moyenne ou bien est une donnée caractérisant la géométrie des équipements de restitution audio dans l'installation et liée à ladite deuxième moyenne.

Bien entendu, l'invention n'est pas limitée aux modes de réalisation décrits ci-dessus et on peut y apporter des variantes de réalisation sans sortir du cadre de l'invention tel que défini par les revendications.

L'invention s'appliquera ainsi à toute installation permettant une restitution sonore d'un flux audio et intégrant un appareil de prise de vue. De préférence, l'installation permettra une restitution sonore multi-canaux d'un flux audio.

L'installation comportera de préférence :

- Au moins deux équipements de restitution audio,
- Des moyens pour recevoir au moins un flux audio,
- Des moyens de mixage permettant de répartir le ou les canaux du flux audio entre les équipements de restitution audio,
- Un appareil de prise de vue,
- Des moyens pour analyser au moins une image fournie par l'appareil de prise de vue, en détecter au moins une information caractéristique de la position de chacun des utilisateurs présents sur l'image et transmettre cette information de position aux moyens de mixage pour que lesdits moyens de mixage puissent répartir le ou les canaux du flux audio entre les équipements de restitution audio au vu de cette information.

Ces différents éléments pourront être agencés au sein d'un même équipement, et par exemple au sein d'un équipement décodeur, ou pourront former en partie ou en totalité des entités distinctes.

Les moyens pour recevoir au moins un flux audio et/ou les moyens de mixage et/ou les moyens d'analyse d'au moins une image pourront ainsi comporter par exemple un processeur et/ou un calculateur et/ou un micro-ordinateur ... qui soient communs ou non à certains ou plusieurs ou tous ces moyens précités.

Ainsi, bien qu'ici l'équipement décodeur soit un boîtier décodeur, l'équipement décodeur pourra être tout autre équipement capable de réaliser un décodage audio, et par exemple une console de jeu, un ordinateur, une *smart*-TV, une tablette numérique, un téléphone portable, un décodeur de télévision numérique, un boitier décodeur STB, etc.

De même, bien qu'ici les équipements de restitution audio soient intégrés à l'équipement décodeur, au moins un des équipements de restitution audio pourra être un élément distinct de l'équipement décodeur. Ainsi, bien qu'ici les équipements de restitution audio soient des haut-parleurs intégrés à l'équipement décodeur, au moins un des équipements de restitution audio pourra être une enceinte connectée externe ou un autre équipement muni d'un haut-parleur, par exemple une barre de son. Au moins un des équipements de restitution audio pourra ainsi être déporté de l'équipement décodeur dans le lieu où évolue les utilisateurs et non agencé dans ou au voisinage immédiat de l'équipement décodeur, au moins une information sur la position de l'équipement de restitution audio déporté sera alors fournie aux moyens de mixage (par exemple lors de la pose de l'installation ou lors d'une étape de calibrage préalable).

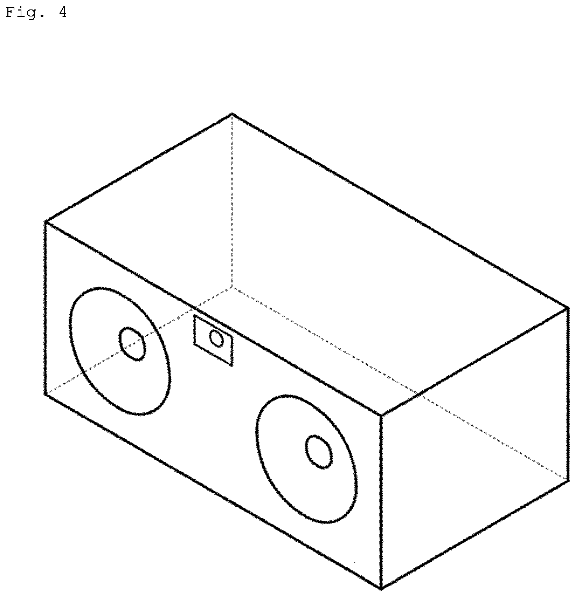

On pourra avoir un nombre différent d'équipements de restitution audio que ce qui a été indiqué. Par exemple, en référence à la figure 4, l'installation pourra comporter deux équipements de restitution audio. Par exemple les deux équipements de restitution audio pourront être intégrés à l'équipement décodeur. Optionnellement l'équipement décodeur est équipé de deux équipements de restitution audio qui sont agencés sur un même flanc dudit équipement décodeur, à chacune des extrémités longitudinales dudit flanc. Par exemple l'appareil de prise de vue est agencé sur le même flanc que celui intégrant les deux équipements de restitution audio et est agencé entre lesdits deux équipements de restitution audio.

De même, le nombre de canaux du flux audio d'entrée pourra être différent de ce qui a été indiqué. Le flux audio pourra ainsi comporter un seul canal, deux canaux, trois canaux, quatre canaux, sept canaux ...

Par ailleurs, le ratio entre les canaux du flux audio et le nombre d'équipements de restitution audio pourra être différent de ce qui a été indiqué. Par exemple, il pourra y avoir davantage d'équipements de restitution audio que de canaux dans le flux d'entrée. Optionnellement, l'installation pourra comporter un système de virtualisation (intégré par exemple aux moyens de mixage et/ou à l'équipement décodeur) permettant de générer des canaux supplémentaires à partir du nombre de canaux initiaux afin de s'assurer que chaque équipement de restitution audio puisse diffuser du son.

Bien qu'ici ce sont les visages des utilisateurs qui sont détectés sur les images, en remplacement ou en complément ce pourra être d'autres parties du corps des utilisateurs qui pourront être détectées comme par exemple le tronc des utilisateurs.

Bien qu'ici l'angle de dispersion et l'angle de gisement optimal soient déterminés dans des étapes successives, lesdits angles pourront être déterminés de manière simultanée au cours d'une même étape.

Bien qu'ici on transmette directement l'angle de gisement optimal (et optionnellement directement l'angle de dispersion), on pourra fournir aux moyens de mixage une grandeur caractéristique dudit angle de gisement optimal (parallèlement une grandeur caractéristique de l'angle de dispersion). Par exemple on pourra fournir aux moyens de mixage une même information qui soit caractéristique à la fois de l'angle de gisement optimal et à la fois de l'angle de dispersion.

Bien qu'ici les moyens de mixage se basent sur une bibliothèque, telle que la bibliothèque Dolby ATMOS, pour répartir le ou les canaux entre les différents équipements de restitution audio, les moyens de mixage pourront se baser sur une autre technologie. Par exemple, les moyens de mixage pourront être configurés pour mettre en œuvre la méthode « ambisonie ». Cette méthode permet en effet de placer des sources sonores virtuelles autour d'un utilisateur en calculant des gains $G_{ij}$

pour chaque équipement de restitution audio i et chaque source j en fonction d'une position théorique de l'utilisateur par rapport aux équipements de restitution audio. Pour plus de détails sur la méthode « ambisonie » on pourra par exemple se référer à la page internet https://fr.wikipedia.org/wiki/Ambisonie et/ou à la thèse Méthodes numériques pour la spatialisation sonore, de la simulation à la synthèse binaurale, M. Aussal - École Polytechnique X - 2014 (https://pastel.archives-ouvertes.fr/tel-01095801

En appliquant cette méthode à une des mises en œuvre de l'invention (par exemple, et de manière non limitative, à celle de la figure 4) pour tenir optionnellement compte de l'angle de dispersion $\delta$, on calcule par exemple plusieurs gains $G_{ij}(\beta)$ correspondant à plusieurs angles de gisement $\beta$ dans la plage allant de $\beta_{opt}$ - $\delta/2$ à $\beta_{opt}$ + $\delta/2$ en appliquant la méthode ambisonique. Ensuite on applique pour chaque source et chaque équipement de restitution audio un gain égal à la moyenne $\overline{G}_{ij}$ des $G_{ij}(\beta)$ calculés. Ainsi on enverra les signaux suivants :

$$\bar{G}_{LC} \times C + \bar{G}_{LG} \times G + \bar{G}_{LD} \times D + \bar{G}_{LR} \times R$$

pour l'équipement de restitution audio gauche

$$\bar{G}_{RC} \times C + \bar{G}_{RG} \times G + \bar{G}_{RD} \times D + \bar{G}_{RR} \times R$$

pour l'équipement de restitution audio droit.

L'installation (et par exemple l'équipement décodeur) pourra comporter une mémoire sur laquelle est enregistrée un ou des jeux d'au moins un paramètre précalculé (à savoir les paramètres audios devant être fournis aux différents équipements de restitution audio par les moyens de mixage - par exemple dans le cadre de la méthode « ambisonie », les paramètres audios comporteront les gains Gij précités) correspondant à plusieurs angles de gisement et/ou plusieurs angles de dispersion. Par exemple sur la mémoire pourra être enregistré un ou des jeux d'au moins un paramètre précalculé correspondant à plusieurs angles de gisement généraux (par exemple des angles de gisement optimal généraux pris de -60° à +60° par pas de 10° - en fonction de l'angle de gisement optimal réellement calculé on estimera l'angle de gisement optimal général le plus proche et on appliquera le jeux de paramètre(s) correspondant) et/ou sur laquelle est enregistré un ou des jeux d'au moins un paramètre précalculé correspondant à plusieurs angles de dispersion généraux (par exemple un angle de dispersion de 10° correspondant au cas d'un seul utilisateur et un angle de dispersion de 45° correspondant à un groupe de plusieurs utilisateurs - en fonction de l'angle de dispersion réellement calculé (et/ou du nombre d'utilisateurs détectés sur l'image) on estimera l'angle de dispersion général le plus proche et on appliquera le jeux de paramètre(s) correspondant).

L'installation (et par exemple l'équipement décodeur) pourra appliquer un filtrage, en particulier un filtrage temporel, entre plusieurs valeurs successives d'angles de gisement optimal et/ou d'angles de dispersion. Ceci permettra d'éviter des effets indésirables liés à des changements brutaux de paramètres audios transmis par les moyens de mixage aux différents équipements de restitution audio et basés sur l'angle de gisement optimal et/ou l'angle de dispersion (par exemple si un visage est mal détecté et passe son temps à apparaître et disparaître d'une image à l'autre). Le filtrage pourra par exemple être une moyenne (pondérée ou non) des dernières valeurs calculées d'angles de gisement optimal et/ou d'angle de dispersion, ou tout autre filtrage passe-bas appliqué à la séquence des dernières valeurs calculées d'angles de gisement optimal et/ou d'angle de dispersion. Le filtrage pourra être une hystérésis appliqué sur l'angle de gisement optimal et/ou l'angle de dispersion (c'est-à-dire les moyens de mixage ne modifieront les paramètres audios que si la différence entre l'angle de gisement optimal actuel et l'angle de gisement optimal qui avait été utilisé pour calculer les paramètres audio actuels, est supérieure à un premier seuil fixé (par exemple un seuil compris entre 2 et 10° et par exemple un seuil de 5°) et/ou si la différence entre l'angle de dispersion actuel et l'angle de dispersion qui avait été utilisé pour calculer les paramètres audio actuels, est supérieure à un deuxième seuil fixé (par exemple un seuil compris entre 5 et 15° et par exemple un seuil de 10°). Le filtrage pourra être mis en œuvre par changement d'un jeu de paramètre(s) audio uniquement si plusieurs déterminations successives (par exemple au moins deux ou au moins trois déterminations successives) d'angle de gisement optimal et/ou d'angle de dispersion désignent un jeu de paramètre(s) différent du jeu actif.

Bien qu'ici l'angle de gisement optimal se base sur les abscisses liées aux visages détectés, l'angle de gisement optimal pourra se baser sur les ordonnées desdits visages détectés ou bien pourra prendre en compte à la fois les abscisses et les ordonnées des visages détectés.

Bien qu'ici on se base toujours sur une seule image pour estimer une valeur (par exemple l'angle de gisement optimal et/ou la dispersion et/ou la distance d'un utilisateur à l'installation), on pourra également se baser sur un plus grand nombre d'images (pour un nombre N d'images donné) et déterminer par exemple la moyenne des valeurs calculées pour ces N images. On pourra par exemple fournir cette moyenne comme données d'entrée aux moyens de mixage ou déterminer une donnée d'entrée à fournir aux moyens de mixage à partir de cette moyenne.

## Revendications

1. Procédé de gestion d'un flux audio lu par au moins un groupe d'équipements de restitution audio comprenant au moins deux équipements de restitution audio, ledit groupe étant agencé dans un lieu donné, le procédé étant **caractérisé en ce qu'**il comporte au moins les étapes de :

- Détecter sur au moins une image acquise par au moins un appareil de prise de vue (120) du lieu donné, la ou les utilisateurs présents sur l'image et en déduire, pour l'utilisateur ou chacun desdits utilisateurs, au moins une information caractéristique de la position de l'utilisateur considéré dans ladite image,
- Déterminer au moins à partir des différentes informations caractéristiques, un angle de gisement optimal ($\beta_{opt}$) défini par l'angle formé entre :

• Un axe (11) de l'appareil de prise de vue, et
• Un axe (12) selon lequel un son restitué par le groupe d'équipement de restitution audio se propage pour atteindre le ou les utilisateurs qui étaient présents sur l'image,

l'angle de gisement optimal ($\beta_{opt}$) étant lié à une moyenne spatiale de la position de différents utilisateurs apparaissant sur l'image, l'angle de gisement optimal étant alors donné par la formule :

$$\beta_{opt} = \tan^{-1}\left(\frac{2\bar{x}}{W}\tan\frac{\alpha}{2}\right)$$

Où :

$\bar{x}$ désignant une moyenne des abscisses ou des ordonnées liées à chacun des visages détectés sur l'image,
$\beta_{opt}$ désigne l'angle de gisement optimal,
W désigne la largeur de l'image acquise en pixels, et
$\alpha$ désigne l'angle de champ de l'appareil de prise de vue 120 dans un plan horizontal,

ou l'angle de gisement optimal ($\beta_{opt}$) étant lié à une moyenne angulaire de la position de différents utilisateurs apparaissant sur l'image, un angle de gisement $\beta$ étant à cet effet défini pour chaque visage détecté à partir de l'abscisse ou de l'ordonnée x lié audit visage par :

$$\beta = \tan^{-1}\left(\frac{2x}{W}\tan\frac{\alpha}{2}\right)$$

l'angle de gisement optimal $\beta_{opt}$ étant alors donné par la moyenne desdits différents angles de gisement $\beta$,
ou l'angle de gisement optimal ($\beta_{opt}$) étant lié aux positions de deux utilisateurs les plus éloignés l'un de l'autre sur l'image parmi les différents utilisateurs apparaissant sur l'image, l'angle de gisement optimal $\beta_{opt}$ étant alors déterminé à partir des abscisses ou des ordonnées minimale $x_{min}$ et maximale $x_{max}$ liées aux visages détectés par calcul des angles de gisement $\beta_{min}$ et $\beta_{max}$ correspondants avec la formule :

$$\beta_{min} = \tan^{-1}\left(\frac{2x_{min}}{W}\tan\frac{\alpha}{2}\right)$$

$$\beta_{max} = \tan^{-1}\left(\frac{2x_{max}}{W}\tan\frac{\alpha}{2}\right)$$

- l'angle de gisement optimal $\beta_{opt}$ est alors défini comme étant la moyenne de $\beta_{min}$ et $\beta_{max}$, Fournir à des moyens de mixage répartissant le flux audio entre les différents équipements de restitution audio du groupe, une grandeur caractéristique de l'angle de gisement optimal afin que les moyens de mixage répartissent le flux audio au moins en fonction de ladite grandeur.

**2.** Procédé selon la revendication 1, dans lequel l'appareil de prise de vue (120) génère à intervalle régulier une nouvelle image du lieu donné, et la valeur d'angle de gisement optimal ($\beta_{opt}$) est recalculée pour chaque nouvelle image afin que les moyens de mixage répartissent le flux audio entre les différents équipements de restitution audio du groupe sur la base de cette nouvelle valeur d'angle de gisement optimal.

**3.** Procédé selon l'une des revendications 1 à 2, dans lequel l'information caractéristique est au moins une abscisse dans l'image.

**4.** Procédé selon l'une des revendications 1 à 3, dans lequel l'information caractéristique est une information caractéristique de la position du visage de l'utilisateur dans l'image.

**5.** Procédé selon l'une des revendications 1 à 4, dans lequel on estime également un angle de dispersion ($\alpha$) qui caractérise la dispersion de différents utilisateurs présents sur l'image et on fournit aux moyens de mixage une grandeur caractéristique de l'angle de dispersion afin que les moyens de mixage répartissent le flux au moins en fonction de ladite valeur.

**6.** Procédé selon l'une des revendications 1 à 5, dans lequel on estime l'angle de gisement optimal ($\beta_{opt}$) également en tenant compte de l'attention d' utilisateurs présents sur l'image.

**7.** Procédé selon la revendication 6, dans lequel on prend en compte l'orientation de la tête des utilisateurs présents sur l'image pour déterminer l'angle de gisement optimal ($\beta_{opt}$).

8. Procédé selon la revendication 6 ou la revendication 7, dans lequel on prend en compte un endormissement potentiel des utilisateurs présents sur l'image pour déterminer l'angle de gisement optimal ($\beta_{opt}$).

9. Procédé selon l'une des revendications 1 à 8, dans lequel on prend en compte la mobilité d'utilisateurs présents sur l'image pour gérer le flux audio.

10. Procédé selon l'une des revendications 1 à 9, dans lequel on fournit également aux moyens de mixage la distance d'utilisateurs à une installation comprenant le groupe d'équipement de restitution audio.

11. Procédé selon l'une des revendications 1 à 10, dans lequel les moyens de mixage répartissent le flux audio entre les différents équipements de restitution audio du groupe en se basant sur un ou des jeux d'au moins un paramètre audio précalculé.

12. Procédé selon l'une des revendications 1 à 11, dans lequel le flux audio est un flux audio multi-canal et le groupe d'équipements de restitution audio comporte au moins un équipement de restitution audio de moins que le nombre de canaux du flux audio multi-canal.

13. Installation permettant de mettre en œuvre le procédé selon l'une des revendications 1 à 12, comprenant au moins deux équipements de restitution audio, des moyens pour recevoir au moins un flux audio, les moyens de mixage permettant de répartir le ou les canaux du flux audio entre les équipements de restitution audio, un appareil de prise de vue et des moyens pour analyser au moins une image fournie par l'appareil de prise de vue.

14. Installation selon la revendication 13, dans laquelle l'installation est un équipement décodeur (10).

15. Programme d'ordinateur comprenant des instructions qui conduisent une installation selon la revendication 13 ou la revendication 14 à exécuter le procédé selon l'une des revendications 1 à 12.

16. Support d'enregistrement lisible par ordinateur, sur lequel est enregistré le programme d'ordinateur selon la revendication 15.

## Patentansprüche

1. Verfahren zur Verwaltung eines Audiostroms, der von zumindest einer Gruppe von Audiowiedergabegeräten, welche zumindest zwei Audiowiedergabegeräte umfasst, wiedergegeben wird, wobei die Gruppe an einem gegebenen Ort angeordnet ist, wobei das Verfahren **dadurch gekennzeichnet ist, dass** es zumindest die Schritte umfasst, dass:

- auf zumindest einem Bild des gegebenen Ortes, das von zumindest einem Bildaufnahmegerät (120) aufgenommen wurde, der eine oder die mehreren auf dem Bild anwesenden Nutzer erkannt werden, und dass daraus jeweils für den einen Nutzer oder für jeden der mehreren Nutzer zumindest eine Kenninformation für die Position des entsprechenden im Bild anwesenden Nutzers abgeleitet wird,

- zumindest anhand der verschiedenen Kenninformationen ein optimaler Peilwinkel ($\beta_{opt}$) ermittelt wird, welcher definiert wird durch den Winkel zwischen:

  • einer Achse (11) des Bildaufnahmegeräts und
  • einer Achse (12), entlang derer sich ein von der Gruppe von Audiowiedergabegeräten wiedergegebener Ton ausbreitet, bis er den einen oder die mehreren auf dem Bild anwesenden Nutzer erreicht, wobei der optimale Peilwinkel ($\beta_{opt}$) an einen räumlichen Mittelwert aus den Positionen verschiedener auf dem Bild anwesender Nutzer gebunden ist,

wobei der optimale Peilwinkel durch folgende Gleichung gegeben ist:

$$\beta_{opt} = \tan^{-1}\left(\frac{2\bar{x}}{W}\tan\frac{\alpha}{2}\right)$$

wobei:

$\bar{x}$ einen Mittelwert der Abszissen oder Ordinaten bezeichnet, die mit jedem der auf dem Bild erkannten Gesichter verbunden sind,
$\beta_{opt}$ den optimalen Peilwinkel bezeichnet,
W die Breite des aufgenommenen Bildes in Pixeln bezeichnet, und
$\alpha$ den Bildwinkel des Bildaufnahmegeräts (120) in einer horizontalen Ebene bezeichnet, oder der optimale Peilwinkel ($\beta_{opt}$) an einen Winkelmittelwert der Position verschiedener auf dem Bild anwesender Nutzer gebunden ist, wobei zu diesem Zweck für jedes Gesicht, das anhand der mit dem jeweiligen Gesicht verbundenen Abszisse oder Ordinate x erkannt wird, ein Peilwinkel $\beta$ wie folgt definiert wird:

$$\beta = \tan^{-1}\left(\frac{2x}{W}\tan\frac{\alpha}{2}\right)$$

wobei sich der optimale Peilwinkel ($\beta_{opt}$) dann durch den Mittelwert aus den verschiedenen Peilwinkeln $\beta$ ergibt,
oder der optimale Peilwinkel ($\beta_{opt}$) an die jeweiligen Positionen zweier auf dem Bild am weitesten voneinander entfernt stehender Nutzer unter den verschiedenen auf dem Bild anwesenden Nutzern gebunden ist, wobei der optimale Peilwinkel $\beta_{opt}$ dann anhand der minimalen Abszisse oder Ordinate $x_{min}$ und der maximalen Abszisse oder Ordinate $x_{max}$, die mit durch Berechnung der entsprechenden Peilwinkel $\beta_{min}$ und $\beta_{max}$ erkannten Gesichter verbunden sind, mit der folgenden Formel ermittelt wird:

$$\beta_{min} = \tan^{-1}\left(\frac{2x_{min}}{W}\tan\frac{\alpha}{2}\right)$$

$$\beta_{max} = \tan^{-1}\left(\frac{2x_{max}}{W}\tan\frac{\alpha}{2}\right)$$

- der optimale Peilwinkel ($\beta_{opt}$) sodann als Mittelwert von $\beta_{min}$ et $\beta_{max}$ definiert wird,
- An Mischeinrichtungen, die den Audiostrom zwischen den verschiedenen Audiowiedergabegeräten der Gruppe verteilen, eine Kenngröße des optimalen Peilwinkels bereitgestellt wird, damit die Mischeinrichtungen den Audiostrom zumindest in Abhängigkeit zu dieser Kenngröße verteilen.

2. Verfahren nach Anspruch 1, wobei das Bildaufnahmegerät (120) in regelmäßigem Abstand ein neues Bild des gegebenen Orts erzeugt, und der Wert des optimalen Peilwinkels ($\beta_{opt}$) für jedes neue Bild neuberechnet wird, damit die Mischeinrichtungen basierend auf dem neuen Wert des optimalen Peilwinkels den Audiostrom zwischen den verschiedenen Audiowiedergabegeräten der Gruppe verteilen.

3. Verfahren nach einem der Ansprüche 1 bis 2, wobei es sich bei der Kenninformation um zumindest eine Abszisse in dem Bild handelt.

4. Verfahren nach einem der Ansprüche 1 bis 3, wobei es sich bei der Kenninformation um eine Kenninformation über die Position des Gesichts des Nutzers in dem Bild handelt.

5. Verfahren nach einem der Ansprüche 1 bis 4, wobei auch ein Verteilungswinkel ($\alpha$), der die Verteilung verschiedener Nutzer auf dem Bild kennzeichnet, geschätzt wird, und den Mischeinrichtungen eine Kenngröße des Verteilungswinkels bereitgestellt wird, damit die Mischeinrichtungen den Audiostrom zumindest in Abhängigkeit zu dieser Kenngröße verteilen.

6. Verfahren nach einem der Ansprüche 1 bis 5, wobei der optimale Peilwinkel ($\beta_{opt}$) auch unter Berücksichtigung der Aufmerksamkeit von auf dem Bild anwesenden Nutzern geschätzt wird.

7. Verfahren nach Anspruch 6, wobei die Kopfausrichtung der auf dem Bild anwesenden Nutzer berücksichtigt wird, um den optimalen Peilwinkel ($\beta_{opt}$) zu ermitteln.

8. Verfahren nach Anspruch 6 oder nach Anspruch 7, wobei ein potentielles Einschlafen der auf dem Bild anwesenden Nutzer berücksichtigt wird, um den optimalen Peilwinkel ($\beta_{opt}$) zu ermitteln.

9. Verfahren nach einem der Ansprüche 1 bis 8, wobei die Mobilität von auf dem Bild anwesenden Nutzern berücksichtigt wird, um den Audiostrom zu verwalten.

10. Verfahren nach einem der Ansprüche 1 bis 9, wobei den Mischeinrichtungen auch der Abstand von Nutzern zu einer Anlage, die die Gruppe von Audiowiedergabegeräten umfasst, bereitgestellt wird.

11. Verfahren nach einem der Ansprüche 1 bis 10, wobei die Mischeinrichtungen basierend auf einem oder mehreren Sätzen von zumindest einem vorberechneten Audioparameter den Audiostrom zwischen den verschiedenen Audiowiedergabegeräten der Gruppe verteilt.

12. Verfahren nach einem der Ansprüche 1 bis 11, wobei es sich bei dem Audiostrom um einen Mehrkanal-Audiostrom handelt und die Gruppe von Audiowiedergabegeräten um zumindest ein Audiowiedergabegerät weniger enthält als die Anzahl der Kanäle des Mehrkanal-Audiostroms.

13. Anlage zur Ausführung des Verfahrens nach einem der Ansprüche 1 bis 12, umfassend zumindest zwei Audiowiedergabegeräte, Empfangsmittel zum Empfang zumindest eines Audiostroms, die Mischeinrichtungen zur Verteilung des oder der Audiostrom-Kanäle zwischen den Audiowiedergabegeräten, ein Bildaufnahmegerät und Analysemittel zur Analyse zumindest eines von dem Bildaufnahmegerät bereitgestellten Bildes.

**14.** Anlage nach Anspruch 13, wobei es sich bei der Anlage um ein Decodergerät (10) handelt.

**15.** Computerprogramm, das Befehle umfasst, welche eine Anlage nach Anspruch 13 oder nach Anspruch 14 dazu veranlassen, das Verfahren nach einem der Ansprüche 1 bis 12 auszuführen.

**16.** Computerlesbares Speichermedium, auf welchem das Computerprogramm nach Anspruch 15 abgespeichert ist.

**Claims**

**1.** Method for managing an audio stream read by at least one audio playback equipment unit comprising at least two pieces of audio playback equipment, said unit being arranged in a given place, the method being **characterized in that** it comprises at least the steps of:

- Detecting on at least one image acquired by at least one image acquisition device (120) of the given place, the user(s) present on the image and deducing from this, for the user or each of said users, at least one piece of information characteristic of the position of the user in question in said image,
- Determining at least from said characteristic information, an optimal bearing angle ($\beta_{opt}$) defined by the angle formed between:

• An axis (11) of the image acquisition device, and
• An axis (12) along which a sound played back by the audio playback equipment unit is propagated to reach the user(s) who were present on the image,

wherein the optimal bearing angle ($\beta_{opt}$) is linked to a spatial average of the position of different users appearing on the image, the optimal bearing angle being then given by the formula:

$$\beta_{opt} = \tan^{-1}\left(\frac{2\bar{x}}{W}\tan\frac{\alpha}{2}\right)$$

Where:

$\bar{x}$ means an x-axis average or an y-axis average linked to each of the faces detected on the image,
$\beta_{opt}$ means the optimal bearing angle,
W means the width of the image acquired in pixels, and

$\alpha$ means the angle of the field of the image acquisition device in a horizontal plane,
or wherein the optimal bearing angle ($\beta_{opt}$) is linked to an angular average of the position of different users appearing on the image, a bearing angle $\beta$ being then calculated for each face detected from the x-axis or y-axis linked to said face by:

$$\beta = \tan^{-1}\left(\frac{2x}{W}\tan\frac{\alpha}{2}\right)$$

the optimal bearing angle $\beta_{opt}$ being thus given by the average of said different bearing angles $\beta$,
or wherein the optimal bearing angle ($\beta_{opt}$) is linked to the positions of two users farthest away from one another on the image from among the different users appearing on the image, the optimal bearing angle ($\beta_{opt}$) being determined from the minimum x-axis and maximum x-axis, or from the minimum y-axis and maximum y-axis, linked to the detected faces, by calculation of the corresponding bearing angles $\beta_{min}$ and $\beta_{max}$ with the formula:

$$\beta_{min} = \tan^{-1}\left(\frac{2x_{min}}{W}\tan\frac{\alpha}{2}\right)$$

$$\beta_{max} = \tan^{-1}\left(\frac{2x_{max}}{W}\tan\frac{\alpha}{2}\right)$$

the optimal bearing angle $\beta_{opt}$ being thus defined as being the average of $\beta_{min}$ and $\beta_{max}$,

- Providing mixing means distributing the audio stream between the different audio playback equipment of the unit, a magnitude characteristic of the optimal bearing angle, such that the mixing means distribute the audio stream at least according to said value.

**2.** Method according to claim 1, wherein the image acquisition device (120) generates, at regular intervals, a new image of the given place, and the optimal bearing angle value ($\beta_{opt}$) is recalculated for each new image, such that the mixing means distribute the audio stream between the different pieces of audio playback equipment of the unit based on this new optimal bearing angle value.

**3.** Method according to one of claims 1 to 2, wherein the characteristic information is at least one x-axis in the image.

4. Method according to one of claims 1 to 3, wherein the characteristic information is a piece of information characteristic of the position of the face of the user in the image.

5. Method according to one of claims 1 to 4, wherein a dispersion angle ($\alpha$) is also estimated, which characterises the dispersion of different users present on the image, and a magnitude characteristic of the dispersion angle is provided to the mixing means, such that the mixing means distribute the stream at least according to said value.

6. Method according to one of claims 1 to 5, wherein the optimal bearing angle ($\beta_{opt}$) is estimated, also considering the attention of users present on the image.

7. Method according to claim 6, wherein the orientation of the head of the users present on the image is considered, to determine the optimal bearing angle ($\beta_{opt}$).

8. Method according to claim 6 or claim 7, wherein a potential sleepiness of the users present on the image is considered, to determine the optimal bearing angle ($\beta_{opt}$).

9. Method according to one of claims 1 to 8, wherein the mobility of users present on the image is considered to manage the audio stream.

10. Method according to one of claims 1 to 9, wherein the distance from users to the installation comprising the audio playback equipment unit is also provided to the mixing means.

11. Method according to one of claims 1 to 10, wherein the mixing means distribute the audio stream between the different pieces of audio playback equipment of the unit by being based on one or more sets of at least one precalculated audio parameter.

12. Method according to one of claims 1 to 11, wherein the audio stream is a multichannel audio stream and the audio playback equipment unit comprises at least one piece of audio playback equipment less than the number of channels of the multichannel audio stream.

13. Installation making it possible to implement the method according to one of claims 1 to 12, comprising at least two pieces of audio playback equipment, means for receiving at least one audio stream, the mixing means making it possible to distribute the channel(s) of the audio stream between the audio playback equipment, an image acquisition device and means for analysing at least one image provided by the image acquisition device.

14. Installation according to claim 13, wherein the installation is decoder equipment (10).

15. Computer program comprising instructions which make an installation according to claim 13 or claim 14 execute the method according to claims 1 to 12.

16. Storage medium which can be read by a computer, on which the computer program according to claim 15 is recorded.

Fig. 1

Fig. 2

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013121515 A1

**Littérature non-brevet citée dans la description**

- **PAUL VIOLA** ; **MICHAEL JONES**. Rapid Object Detection using a Boosted Cascade of Simple Features. *IEEE CVPR*, 2001
- **V. BAZAREVSKY** ; **Y. KARTYNNIK** ; **A. VAKUNOV** ; **K. RAVEENDRAN** ; **M. GRUNDMANN**. BlazeFace: Sub-millisecond Neural Face Detection on Mobile GPUs. *Computing Research Repository*, 2019, https://arxiv.org/abs/1907.05047
- **A.G. HOWARD** ; **M. ZHU** ; **B. CHEN** ; **D. KALENI-CHENKO** ; **W. WANG** ; **T. WEYNAND** ; **M. AN-DREETTO** ; **H. ADAM**. MobileNets : Efficient Convolutional Neural Networks for Mobile Vision Applications. *Computing Research Repository*, 2017, https://arxiv.org/abs/1704.04861
- **A. GUPTA** ; **DR R. TIWARI**. Face Detection Using Modified Viola Jones Algorithm. *International Journal of Recent Research in Mathematics Computer Science and Information Technology*, 2015, https://www.paperpublications.org/upload/book/-Face%20Det ection%20Using%20Modified%20Viola%20Jones%20Algorithm-164.pdf
- **M. TIBREWAL** ; **A. SRIVASTAVA** ; **DR R. KAYAL-VIZHI**. A Deep Learning Approach To Detect Driver Drowsiness. *International Journal of Engineering Research & Technology*, 2021, https://www.ijert.org/a-deep-learning-approach-to-detect-driver-drowsiness
- Méthodes numériques pour la spatialisation sonore, de la simulation à la synthèse binaurale. **M. AUSSAL**. thèse. École Polytechnique, 2014, vol. X